# EUROPEAN PATENT APPLICATION

(11) **EP 0 700 969 A1**
(43) Date of publication of application: **13.03.1996**
(21) Application number: 94117438.5
(22) Date of filing: 04.11.1994
(51) Int. Cl.: C08L 69/00, C08K 5/521, C08K 5/523

(54) **Flameproof thermoplastic resin compositions**

(30) Priority: 05.09.1994 KR 9422217
(71) Applicant: CHEIL INDUSTRIES INC., Taegu 702-050 (KR)
(72) Inventor: Yang, Sam-Joo, Suwon, Kyungki-do (KR); Jang, Bok-Nam, Koonpo, Kyungki-do (KR)
(74) Representative: Hering, Hartmut, Dipl.-Ing.

(57) **Abstract**

The flameproof thermoplastic resin compositions of this invention comprise from 2 to 20 parts by weight of aromatic diphosphates and from 0.1 to 2.0 parts by weight of fluoric resins per 100 parts by weight of the resin mixture consisting of from 60 to 98 % by weight of polycarbonate resins, from 2 to 40 % by weight of g-ABS resins, and from 0 to 20 % by weight of SAN copolymer resins. The structural formula of said aromatic diphosphates is as follows ( I ): 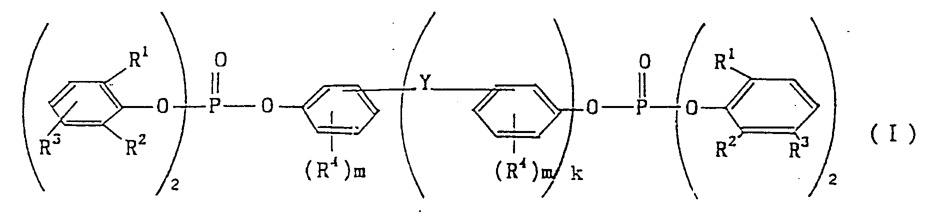
in which, R¹ and R² are same or different lower alkyls, R³ and R⁴ are same or different hydrogen atom or alkyl groups, Y is a single bond or -CH₂-, -C(CH₃)₂-, -S-, -SO₂-, -O-, -CO, or -N=N-, k is 0 or 1, and m is an integer of 0 to 4.

## Description

The present invention relates to flameproof thermoplastic resin compositions, and specifically to those for molding, based on polycarbonate and ABS(acrylonitrile/butadiene/styrene) resins, containing flame retarding phosphorous compounds such as aromatic diphosphate and fluoric resins. SAN(styrene/acrylonitrile) copolymer resins may be contained in the base resins comprising the polycarbonate and ABS resins. The thermoplastic resin compositions of the present invention may further contain such additives as inorganic reagents, heat stabilizers, dyes, or pigments in fractions as needed.

Flameproof thermoplastic resin compositions have long been in use, and their continuously increasing demand has promoted research and development efforts in the field. Examples of flame retardant thermoplastic resins are resins of polyesters, polyamides, polyethylenes, polyethylene oxides, acrylonitrile/butadiene/styrene (ABS), polyacetals, polystyrenes, and polycarbonates. Among these resins, polycarbonates, which exhibit a glass transition temperature of as high as 150°C, high impact and heat resistance, and limited oxygen index(LOI) of up to 25, are widely used for parts of automobiles and electrical appliances owing to their typical flame resistance of UL 94 V2 and high mechanical strength. The impact strength of polycarbonate resins alone, if used as base resin, is sensitively affected by their thickness and notch, however. Considering that a tiny crack on the surface of their molded products seriously deteriorate the impact strength, the use of polycarbonate alone as the base resin is not recommended. It is recommended that other resins be added in order to improve the processability of the polycarbonates. ABS resins, if added to polycarbonates, are known to improve the processability of the polycarbonate resins.

Resins used for housing materials of home appliances and computers must be flame resistant for the sake of fire prevention. Halogen or antimony containing compounds have been used to render flame resistance to thermoplastic resins. These compounds, however, result in the corrosion of the mold itself by the hydrogen halide gases released during the molding process and are fatally harmful due to the toxic gases liberated in the case of fire. As disclosed in European Patent No. 333,694, bromine-substituted phenylphosphates, when used in the preparation of flameproof polycarbonate/ABS resin compositions, enhance the heat resistance, but liberate hydrogen halide gases. The use of polybrominated diphenyl ethers has been prohibited due to the release of toxic gases such as dioxin and difuran during combustion in Germany. Thus, phosphorous compounds have attracted much attention recently because of their good flame resistance in solid phase and little liberation of toxic gases during combustion.

The use of phosphorous compounds to render flame resistance to polycarbonate/ABS resin compositions, as disclosed in Japanese Patent Laid Open No. 62-4747, prevented the dripping of flaming particles during combustion due to the fluoric resins used. This, however, resulted in an unsatisfactory flame resistance and the surface segregation of the flame retarding agent during the molding process, called "juicing", degrading the physical properties of the resin compositions. In order to prevent such a juicing phenomenon, olygomeric phosphate compounds were used in the preparation of polycarbonate/ABS resin compositions to render the flame resistance, as disclosed in European Patent No. 363,608. This improved the heat resistance, but failed to solve the juicing problem completely, and required a complicated mixing apparatus in the extruder because the flame retarding phosphorous compounds were liquid at room temperature.

In this light, the present inventors developed new thermoplastic resin compositions which have a flame resistance of UL 94 V0, good weathering resistance and heat stability, no juicing problem, and improved heat resistance.

An object of the present invention is to provide novel thermoplastic resin compositions with a good flame and weathering resistance, and heat stability, and no juicing problem by adding flame retarding phosphorous compounds and fluoric resins to the resin mixture.

The flameproof thermoplastic resin compositions of this invention comprise from 2 to 20 parts by weight of aromatic diphosphates and from 0.1 to 2.0 parts by weight of fluoric resins per 100 parts by weight of the resin mixture consisting of from 60 to 98 % by weight of polycarbonate resins, from 2 to 40 % by weight of g-ABS resins, and from 0 to 20 % by weight of SAN copolymer resins. The structural formula of said aromatic diphosphates is as follows( I ): 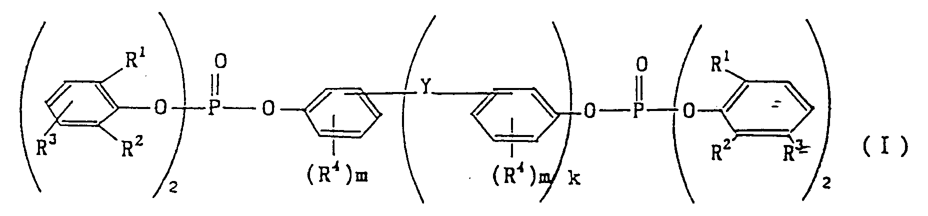
in which, R¹ and R² are same or different lower alkyls, R³ and R⁴ are same or different hydrogen atom or alkyl groups, Y is a single bond or -CH₂-, -C(CH₃)₂-, -S-, -SO₂-, -O-, -CO, or -N=N-, k is 0 or 1, and m is an integer of 0 to 4.

The resin compositions of the present invention may further contain additives such as inorganic reagents, heat stabilizers, light stabilizers, pigments, and dyes depending on their applications.

Flameproof thermoplastic resin compositions of this invention are characterized by the composition of: (A) 100 parts by weight of the mixture of (a) from 60 to 98 % by weight of polycarbonates, (b) from 2 to 40 % by weight of g-ABS resins, (c) from 0 to 20 % by weight of SAN copolymers; (B) from 2 to 20 parts by weight of aromatic diphosphates; and (C) from 0.1 to 2.0 parts by weight of fluoric resins.

Polycarbonate resins with various functional groups, i.e., aromatic, aliphatic, and aromatic/aliphatic polycarbonates, may be used. A mixture of these different polycarbonates may also be used. A polycarbonate with aromatic functional groups in its backbone chain preferably is recommended. More specifically, aromatic polycarbonates synthesized from 2,2'-bis(4-hydroxyphenyl) propane may more preferably be used.

g-ABS resins, used together with said polycarbonates, are graft copolymers obtained by grafting both at least one selected from a group of styrene, α-substituted styrene, and nucleus-substituted styrene, and at least one selected from a group of acrylonitrile, methylmethacrylate, and N-substituted maleimide with a rubber with a glass transition temperature below 10°C. Graft copolymers of said g-ABS resins are obtained by grafting both from 30 to 70 % by weight of at least one selected from a group of styrene, α -substituted styrene, and nucleus-substituted styrene and from 15 to 30 % by weight of at least one selected from a group of methylmethacrylate, N-substituted maleimide, and acrylonitrile with a rubber whose glass transition temperature is below 10°C. The graft ratio of the graft copolymers exceeds 50.

Rubbers of use for said g-ABS resins are acryl rubber, butadiene rubber, ethylene/propylene rubber, styrene/butadiene rubber, or acrylonitrile/butadiene rubber, of which acryl rubber and butadiene rubber are preferably recommended.

SAN copolymer resins, used together with said polycarbonate resins, are a styrenic copolymer, which is synthesized by copolymerizing from 50 to 80 % by weight of at least one selected from a group of styrene, α-substituted styrene, and nucleus-substituted styrene and from 15 to 20 % by weight of at least one selected from a group of methylmethacrylate, N-substituted maleimide, and acrylonitrile.

Aromatic diphosphates used in the present invention are phosphorous compounds as disclosed in Japanese Patent Laid Open No. 5-1079, and have the following formula: 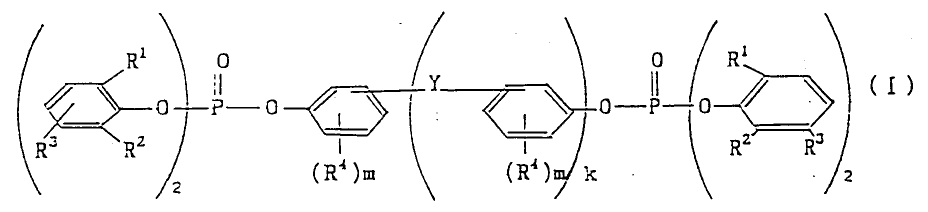
in which, R¹ and R² are same or different lower alkyls, R³ and R⁴ are same or different hydrogen atom or alkyl groups, Y is a single bond or -CH₂-, -C(CH₃)₂-, -S-, -SO₂-, -O-, -CO, or -N=N-, k is 0 or 1, and m is an integer of 0 to 4.

Said aromatic diphosphates are crystalline powders, and the representative examples are the following compounds, (II), (III) and (IV): 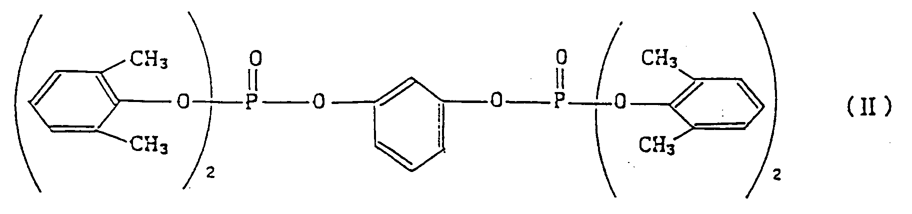 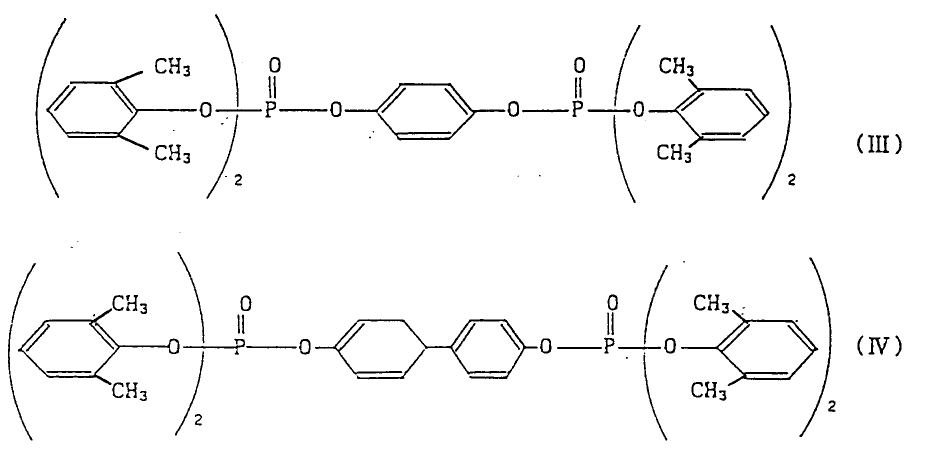
From 2 to 20 parts by weight of aromatic diphosphates per 100 parts by weight of the base resin are used in the present invention.

Examples of fluoric resins, those of conventional use, are polytetrafluoroethylene, polyvinylidenefluoride, copolymer of polytetrafluoroethylene and polyvinylidenefluoride, copolymer of tetrafluoroethylene and fluoroalkylvinylether, and copolymer of tetrafluoroethylene and hexafluoropropylene. These resins may be used separately or in a mixture of two or more. The fluorine content of these fluoric resins must be from 39 to 76 % by weight. From 0.1 to 2.0 parts by weight of fluoric resins per 100 parts by weight of the base resin may be used.

The resin compositions of the present invention may further contain additives such as inorganics, heat stabilizers, oxidation inhibitors, light stabilizers, pigments, and/or dyes depending on specific applications. Examples of inorganic additives are asbestos, glass fiber, talc, or ceramic and are used in from 0 to 30 parts by weight per 100 parts by weight of polycarbonates or polycarbonates containing ABS resins.

Thermoplastic resin compositions of the present invention, comprising aromatic diphosphates and fluoric resins based on polycarbonate resins, g-ABS resins, and SAN copolymer resins, do not liberate toxic gases during combustion unlike those with halogen containing flame retarding agents, do not have the surface segregation problem such as juicing phenomenon, and show improved heat resistance.

For the preparation of the thermoplastic resin compositions of this invention, aromatic diphosphates and fluoric resins are first mixed with base resins consisting of polycarbonates, g-ABS resins, and SAN copolymer resins. Inorganic additives, heat stabilizers, oxidation inhibitors, light stabilizers, dyes and/or pigments are then added to the mixture in a mixer. This final mixture is extruded through an extruder into molded compositions in pellet forms.

The invention may be better understood by reference to the following examples which are intended for the purpose of illustration and are not to be construed as in any way limiting the scope of the present invention, which is defined in the claims appended hereto.

### EXAMPLES

Preparation and specifics of: (A) the components of the base resins, i.e., (a) polycarbonate resins, (b) g-ABS resins, and (c) SAN copolymer resins; (B) aromatic diphosphates; and (C) fluoric resins, which are all used in Examples 1-3 and Comparative Examples 1-3, are as follows:
**(A) Base resins**
   (a) **Polycarbonate resins**: L-1250W Grade of Teijin, Inc. of Japan was used.
   (b) **g-ABS resins**: For the preparation of g-ABS resins, the mixture of 50 grams of butadiene rubber latex powder, 36 grams of styrene, 14 grams of acrylonitrile, and 150 grams of deionized water was allowed for 5 hours at 75°C to react with 1.0 gram of potassium oleic acid, 0.4 gram of cumenhydroperoxide, 0.3 gram of a grafting reagent. The g-ABS graft copolymer was then obtained by adding 4 grams of sulfuric acid to the resin compositions prepared from the above reaction.
   (c) **SAN copolymer resins:** SAN copolymer resins were obtained by suspension polymerization of the mixture of 70 grams of styrene, 30 garms of acrylonitrile, and 120 grams of deionized water with the additives of 0.2 gram of azobisisobutylonitrile and 0.5 gram of tricalciumphosphate. The reaction product was rinsed, dehydrated, and dried to give the powdery SAN copolymer resin.
**(B) Aromatic diphosphates**
   Aromatic diphosphates of the structure (II) were prepared according to Japanese Patent Laid Open No. 5-1079 as follows:
   244 grams of 2,6-xylenol, 20 grams of xylene, and 1.5 grams of MgCl₂ were mixed under a heating condition in a branched flask with which a stirrer, a thermometer, a burette, and a condenser were equipped. When the temperature of the reaction mixture reached 120 °C, 150 grams of oxychlorophosphate was dropped to the mixture over a 2 hour period. Hydrogen chloride gas released in this process was removed by the condenser. Upon the completion of the oxychlorophosphate dropping, the temperature of the reaction mixture was heated slowly to 180°C over a 2 hour period. 55 grams of resorcinol and 1.5 grams of MgCl₂ were added under a heating condition to 345 grams of di(2,6-xylenyl)chlorophosphate obtained from the above process in a flask, and the removal of HCl was carried out by slowly heating the mixture to 180°C over a 2 hour period. The resultant reaction mixture was kept at 180°C for 2 hours, and then at a reduced pressure of 200 mmHg for 2 additional hours. The remaining catalysts were removed from the reaction mixture by adding 500 grams of xylene and 200 grams of 10% aqueous HCl and while stirring the mixture. The mixture was then rinsed, stirred, and cooled to room temperature to give the precipitated product. The precipitate was separated by filtering from the solution mixture, rinsed with 200 grams of methanol, and then dried under a reduced pressure to obtain said compound with a structure (II).
(C) **Fluoric resins:** Teflon(trademark) 7AJ of Dupont, Inc. of the U.S.A was used.

### Examples 1-3 and Comparative Examples 1-3

Compositions of each component used in Examples 1-3 and Comparative Examples 1-3 are shown in Table 1. For the oxidation inhibitor, 0.2 gram of hindered phenol or a phosphite compound was used in Examples 1-3 and Comparative Examples 1-3.

In Comparative Examples 1-3, commonly used triphenylphosphate instead of aromatic diphosphates used in Examples 1-3 was used as the flame retarding additive.

In Examples 1-3 and Comparative Examples 1-3, all components were mixed and extruded into resin compositions in pellet forms at 250°C. These resin compositions were injection-molded into test specimens.

**TABLE 1**

| | | Example 1 | Example 2 | Example 3 | Comp. Ex. 1 | Comp. Ex. 2 | Comp. Ex. 3 |
|---|---|---|---|---|---|---|---|
| (A) | (a) Polycarbonate Resins | 90 | 80 | 70 | 90 | 80 | 85 |
| | (b) g-ABS Resins | 10 | 10 | 18 | 10 | 10 | 18 |
| | (c) SAN Copolymer Resins | 0 | 10 | 12 | 0 | 10 | 10 |
| (B) Aromatic Diphosphates | | 10 | 14 | 18 | - | - | - |
| (C) Fluoric Resins | | 1.0 | 1.0 | 1.0 | 1.0 | 1.0 | 1.0 |
| Triphenylphosphate | | - | - | - | 10 | 14 | 18 |
| All numbers are in grams. | | | | | | | |

Flame resistance, heat stability, and juicing tests have been performed for the resin compositions prepared according to Examples 1-3 and Comparative Examples 1-3. The test results are shown in Table 2.

**TABLE 2**

| | Example 1 | Example 2 | Example 3 | Comp. Ex. 1 | Comp. Ex. 2 | Comp. Ex. 3 |
|---|---|---|---|---|---|---|
| UL 94(1/16)* | V-0 | V-0 | V-0 | V-0 | V-0 | V-0 |
| Heat Resistance(VST)** | 115 | 106 | 94 | 106 | 92 | 80 |
| Juicing** | No | No | No | Yes | Yes | Yes |

| | | | | | | |
|---|---|---|---|---|---|---|
| * : Tested according to UL 94 VB. | | | | | | |
| **: Tested according to ASTM D 306. | | | | | | |
| ***: Observed specimens kept for 24 hours in an 80°C oven using an optical microscopy. (Yes: Juicing was observed, No: No jucing was observed). | | | | | | |

## Claims

1. A flameproof thermoplastic resin composition comprising:
(A) 100 parts by weight of a base resin consisting of:
(a) from 60 to 98 % by weight of polycarbonate resins;
(b) from 2 to 40 % by weight of g-ABS graft copolymer resins with graft index of 50 or larger, which are prepared by graft-copolymerization of: from 15 to 60 % by weight of a rubber with a glass transition temperature less than 10°C; from 30 to 70 % by weight of at least one selected from a group of styrene, α-substituted styrene, and nucleus-substituted styrene; and from 15 to 30 % by weight of at least one selected from a group of methylmethacrylate, N-substituted maleimide, and acrylonitrile; and
(c) from 0 to 20 % by weight of SAN copolymer resins, which are a copolymer of from 50 to 80 % by weight of at least one selected from a group of styrene, α-substituted styrene, and nucleus-substituted styrene and from 50 to 20 % by weight of at least one selected from a group of methylmethacylate, N-substituted maleimide, and acrylonitrile;
(B) from 2 to 20 parts by weight of aromatic diphosphates; and
(C) from 0.1 to 2.0 parts by weight of fluoric resins.

2. The thermoplastic resin composition defined in calm 1 wherein said aromatic diphosphate has the following formula( I ): 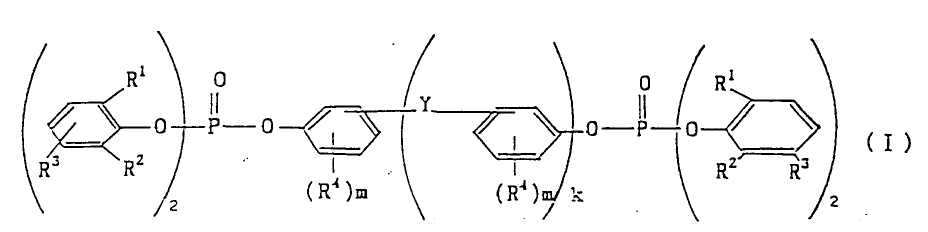 in which, R¹ and R² are same or different lower alkyls, R³ and R⁴ are same or different hydrogen atom or alkyl groups, Y is a single bond or -CH₂-, -C(CH₃)₂-, -S-, -SO₂, -O-, -CO, or -N=N-, k is 0 or 1, and m is an integer of 0 to 4.

3. The thermoplastic resin composition defined in claim 1 wherein said fluoric resin is at least one selected from a group of polytetrafluoroethylene, polyvinylidenefluoride, copolymer of polytetrafluoroethylene and polyvinylidenefluoride, copolymer of tetrafluoroethylene and fluoroalkylvinylether, and copolymer of tetrafluoroethylene and hexafluoropropylene.

4. The thermoplastic resin composition defined in claim 1 wherein said rubber is at least one selected from a group of acryl rubber, butadiene rubber, ethylene/propylene rubber, styrene/butadiene rubber, and acrylonitrile/butadiene rubber.

5. The thermoplastic resin composition defined in claim 1 wherein said resin composition further comprises inorganics, heat stabilizers, oxidation inhibitors, light stabilizers, pigments and/or dyes.
